# EUROPEAN PATENT APPLICATION

(11) **EP 3 290 134 A1**
(43) Date of publication of application: **07.03.2018**
(21) Application number: 16001908.9
(22) Date of filing: 01.09.2016
(51) Int. Cl.: B22F 3/105, B29C 67/00, B01D 53/26, B01D 53/46, C21D 1/76

(54) **METHOD FOR ADDITIVE MANUFACTURING**

(71) Applicant: Linde Aktiengesellschaft, 80331 München (DE)
(72) Inventor: Wiberg, Sören, 17835 Ekerö (SE); Foret, Pierre, 80796 München (DE)
(74) Representative: Gellner, Bernd

(57) **Abstract**

Method for the additive manufacturing of metal powders by selective sintering or melting of a metal powder in a powder bed by introducing a high energy into the selected parts of the powder bed, wherein the additive manufacturing is processed in a chamber under a protective or purging gas,
characterized in that the oxygen contact of the chamber and/or the purging gas is reduced by continu-ously or sequently enriching the purging gas with a gaseous hydrate.

## Description

The invention relates to a method for additive manufacturing, particularly additive manufacturing using metal powders.

Starting in the late 1980th a large number of additive processes are now available and widely spread. The main differences between processes relate to the way layers are deposited to obtain parts and in the materials that are used.

Especially, in additive manufacturing methods using metal powders several methods are common meanwhile.

For the processing of metal powders the nowadays used methods are, electrone beam melting (EBM), selective laser melting (SLM), selective heat sintering (SHS), selective laser sintering (SLS), the direct metal laser sintering (DMLS
In the selective laser sintering (SLS) a high power laser fuses a powder of metal (or ceramics or glass) into a mass that has a desired three-dimensional shape. In this case the laser selectively fuses powdered material by scanning cross-sections generated from a description of the part on the surface of a powder bed. After each cross-section is scanned, the powder bed is lowered by one layer thickness, a new layer of powder material is applied on top and the process is repeated until the part is completed. As the density of the finished party depends on the power of the laser and not the laser duration normallypulsed lasers are used. In these processes normally the powder material is preheated below the melting point of the powder to make it easier for the laser to read the temperature above the melting point.

With selective laser sintering parts from metals can be made including steel alloys, titanium, and alloy mixtures. In the method the physical process can be a full melting, a partial melting or a liquid phase sintering.

The direct metal laser sintering (DMLS) uses a laser which is directed to a bed of powdered metal wherein the material is melted or welded together to create the solid structure. A device for direct metal laser sintering uses a laser wherein a built chamber area uses a material dispensing platform and a built platform along with a recoater plate used to move new powder over the built platform. This technology fuses metal powder into a solid part by melting and locally using the focus laser beam. Parts are built-up and additively layer-by-layer typical using layers which are for example about 20 µm thick. The used material is stainless steel, tool steel, cobalt chromium, inconel, aluminum and titanium, low alloyed steel, super alloys, copper, and more.

One other methods to consolidate metal powders into a solid mass is the so-called electron beam melting which uses an electron beam as a heat source. This is a technique similar to selective laser sintering (sls). In contrast to sintering techniques electron beam melting as well as selective laser sintering fully melts the metal powder in the area where the beam impacts the powder layer.

In the selective laser melting (slm) thin layers of atomized fine metal powders are selectively melted after they have been evenly distributed using a coating mechanism onto a substrate plate using metal that is fastened to an indexing table that moves in the vertical axis. This takes place in sided chamber containing a tightly control atmosphere of inert gas, either argon or nitrogen at oxygen levels below 500 parts per million. Once each layer has been distributed, each two days of the part geometry is fused by selectively melting the powder. This is accomplished with a high power laser beam.

All these above mentioned techniques have in common, that the fusing or melting step is conducted in a closed chamber which is purged with an inert gas and it was previously mentioned with oxygen contents below 500 ppm.

The EP 2 050 526 A1(not granted) discloses an atmosphere for sintering, annealing and hardening comprising silane or borane in a furnace atmosphere comprising nitrogen, hydrogen, argon or any mixture of these gases decrease an addition of gases hydride such as silane or borane.

Metal sintering is defined in the document as a thermal treatment of a metal powder or mixture of metal powders at an enhanced temperature for the purpose of increasing its strength by bonding together the particles. During sintering atomic diffusion takes place in the powder particles are welded together. The sintering operation has normally to be carried out under a protective atmosphere in order to pure an oxidation and to promote the reduction of surface oxides. By adding a gaseous hydride to the furnace atmosphere any oxygen or water vapor in the atmosphere shall react with the gas as hydride which should make it possible to produce atmosphere with an extremely low due-point and low partial pressure of oxygen. The amount of the gaseous and react of hydride which is added to the furnace atmosphere is preferably between 0,00001% and 2%, preferred between 0,001 % to 0,05%.

The EP 2 050 528 A1 (granted) discloses atmospheres for metal atomization including silane or borane wherein the metal atomization process the raw material is melted and then the liquid metal is broken into the fine particles. This is achieved by atomizing a flow of the liquid metal by an atomization agent such as water or gas. The atomization agent struck the liquid metal at a high velocity whereby the molten metal is disintegrated into the fine droplets which solidify thereafter. During the production process fine particles absorbe oxygen from the atomization agent which might react with alloying elements and might cause problems in the production of special alloyed metal powder. Instead of using water or compressed air as an atomization agent it is known to atomize a molten metal with an inert gas, for example nitrogen or argon. In that document a method for producing a metal powder by atomizing a molten metal by means of an atomization gas is disclosed which is characterized in that atomization gas comprises a gaseous hydride such as silane or mono silane.

It is an object of the present invention to provide a method for additive manufacturing of metal powders wherein the purging time is reduced and the purity is increased and an improvments of the quality of the printed parts are expected e g lower oxygen content, better bonding etc

This object is achieved by a method for additive manufacturing of a metal powder wherein purging gas for the purging and shielding comprises a gaseous hydrate depending on the oxygen content in the processing chamber.

Gaseous hydrates such as a silane are known to have a very high reactivity with oxygen containing substances or compounds. For example, at room temperature silane or mono silane undergoes a spontaneous reaction with oxygen as well as with air:

SiH₄ + 2 O₂ -> SiO₂ + 2H₂O

By the inventive addition of a gaseous hydrate to the purging or protective gas the oxygen content is extremely reduced.

In the additive manufacturing of parts from metal powders, namely by melting or sintering with a high energy laser beam, the respective production chamber is purged with a protective gas before the process starts. By the inventive adding of gaseous hydrates like silane this purging time is significantly reduced. Further, the protective gas is lead in a circle flow during the whole process.

According to the invention the oxygen content of the purging gas is monitored and after the initial purging and if the oxygen content is rising over a set threshold a gaseous hydrate can be added again. Therefore, the purging is processed continuously but the adding of the gaseous hydrate can be processed sequentially depending on the oxygen content of the purging gas.

The oxygen content of the purging gas can vary over the sometimes four hours or days lasting production process for example depending on the used powders. In general, oxygen can be undesirably introduced into the system by the processed powder itself or by even smallest leaks in the system.

As the gaseous hydrates, preferably silanes or boranes, are added to the purging gas. Silanes are chemical compounds of silicon and hydrogen. The lowest silanes, mono silane with a chemical formula SiH₄ and disilane with the chemical formula Si₂H₆ are gaseous and are particular suitable for the invention. As they are in the gaseous take at room temperature.

Boranes are chemical compounds of boron and hydrogen. These two smallest members of the borongroup are mono borane or simply borane BH₃ and di borane B2H6. All these compounds are known to be very reactive with oxygen and air. Thus, these boranes are also suitable for reducing the oxygen content of the purging gas.

In particular, it is possible to use a mixture of silanes and boranes.

As in both cases the use of silanes and boranes a solid reaction product appears (SiO₂, BO₂) under any circumstance it has to be avoided that these solid products come in contact with the metal powder or if so in amounts which are so small that they do not deteriorate the chemical or physical properties of the finished part.

The invention is better understood by way of a drawing which schematically shows a preferred embodiment.

According to the invention, therefore, there are different ways to process.

In a first embodiment the purging gas is enriched with the gaseous hydrates before the production process in the chamber 1 starts so that the initial oxygen content of the purging gas is as low as possible.

If, during the production of the part, a lowering of a meanwhile rised oxygen content is necessary, production can be stopped and the purging gas is again enriched with the gaseous hydrate.

In these cases it is preferred to have a high flow rate or a high circulation rate for example caused by a fan 8 of the purged gas so that the very fine solid products of the reaction between the gaseous hydrate and the oxygen do not sediment in the chamber.

It is preferred that a filter 2 for the fine solid particles is provided within the flow system 3.

In another embodiment in which it is possible to have a sequential enrichment with gaseous hydrates as well as a constant enrichment of gaseous hydrates, the gaseous hydrates 6 are fed to and mixed with the purging gas outside the processing chamber, for example in a separate reaction chamber 4 followed down-stream by the filter element 2 or in a purging gas pipe 7 which leads to the processing chamber or away from the processing chamber.

In this case it is more preferred to have a mixing apparatus 5 inside the reaction chamber 4 which leads to a very good distribution of the gaseous hydrates within the purging gas.

Normally the oxygen content insides the chamber 1 is after purging and during process in the state of the art at a level of around 0,1 % O₂ (1000 ppm).

The lower oxygen level according to the invention is beneficial as less oxygen is in the end product. Reducing the O₂-content from 0,1 % to 0,01% or 0,001% takes too much time with the known processes and even the use of a gas like H₂ does not work as the chamber is at room temperature.

According to the invention the gaseous hydrates are mixed with the purging gas in an amount for example 0,5% with 99,5% of the purging gas or protective gas containing for example argon and/or nitrogen.

As the gaseous hydrate reacts with the oxygen having solid fine particles as well as water vapor, it is more preferred to have a purging gas drying in the flow circuit. Such a dryer 9 may be a water vapor absorbing media.

The inventive method is useful to decrease the oxygen and water vapor content of the purging gas which leads to a higher quality of the end product. Further, the processing times are shortened as the O₂-content inside the chamber will decrease much faster than with inert purging gas only.

Its advantages are that no temperature is needed to react the gaseous hydrate with oxygen.

Other oxygen reducing gases are also candidates in this application:
NO (nitic oxide) in small additions reacts to NO2 and could possibly be removed by molecular sieves

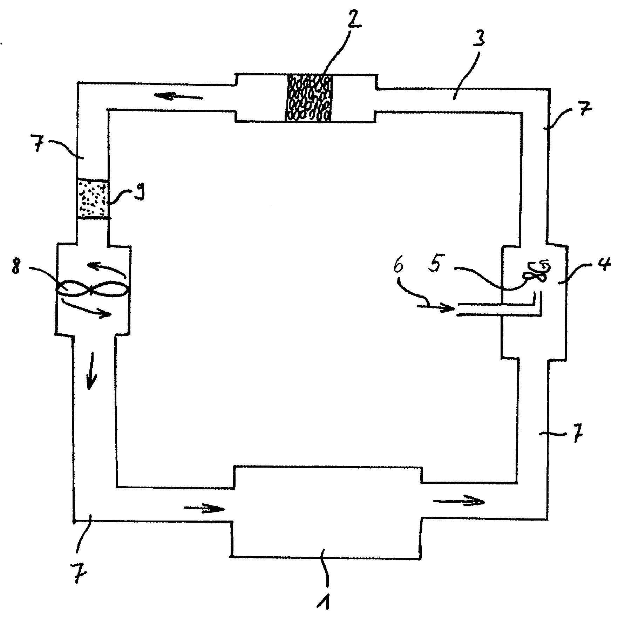

## Claims

1. Method for the additive manufacturing of metal powders by selective sintering or melting of a metal powder in a powder bed by introducing a high energy into the selected parts of the powder bed, wherein the additive manufacturing is processed in a chamber under a protective or purging gas, **characterized in that** the oxygen content in the chamber (1) and/or the purging gas is reduced by continuously or sequently enriching the purging gas with a gaseous hydrate (6) and/or NO.

2. Method according to claim 1, **characterized in that**
the purging gas is flowing in a closed circuit or open stream without recirculation, wherein the purging gas is mixed with the gaseous hydrate inside or outside the processing chamber (1).

3. Method according to any of claims 1 or 2, **characterized in that** as a gaseous hydrate silane or borane is used.

4. Method according to any of the proceeding claims, **characterized in that** the purging gas is mixed with the gaseous hydrates in a separate reaction chamber (4).

5. Method according to any of the proceeding claims, **characterized in that** the oxygen content is measured and the amount of gaseous hydrate is calculated for lowering the oxygen content below a set threshold, wherein the calculated amount of gaseous hydrates is introduced into the system, in particular into the mixing chamber, wherein the introduction is processed in such a way that it lasts at least for one whole circulation of the purging gas volume, so that the introduction of the gaseous hydrates is adopted to the current oxygen content of the purging gas in the mixing chamber, so that no gaseous hydrate is led into the processing chamber.

6. Method according to any of the proceeding claims, **characterized in that** downstream from the zone in which the purging gas is enriched with the gaseous hydrates, a filter element (2) for the retention of solid particles of the reaction products is provided.

7. Method according to any of the proceeding claims, **characterized in that** downstream of the mixing zone of the purging gas with the gaseous hydrates a device (9) for the drying of the purging gas is provided and in particular water vapor absorbing means are provided.
